# EUROPEAN PATENT APPLICATION

(11) **EP 2 404 985 A1**
(43) Date of publication of application: **11.01.2012**
(21) Application number: 10748879.3
(22) Date of filing: 08.03.2010
(51) Int. Cl.: C11B 7/00, A23D 9/02, C11C 3/10, A23D 9/00

(54) **PROCESS FOR PRODUCING OIL-AND-FAT**

(30) Priority: 06.03.2009 JP 2009053997
(71) Applicant: The Nisshin OilliO Group, Ltd., Tokyo 104-8285 (JP)
(72) Inventor: SUGANUMA, Tomomi, Yokosuka-shi Kanagawa 239-0832 (JP); TAKABA, Masato, Yokosuka-shi Kanagawa 239-0832 (JP)
(74) Representative: Bawden, Peter Charles
(86) International application number: PCT/JP2010/053787
(87) International publication number: WO 2010/101288

(57) **Abstract**

The present invention discloses a method for producing fats and oils rich in a X2U triglyceride, which comprises the step of fractionating fats and oils which comprise 20 to 60 mass % of a di-saturated mono-unsaturated triglyceride (X2U triglyceride) consisting of two saturated fatty acid residues and one unsaturated fatty acid residue in total triglycerides in the presence of 1 to 50 mass % of a fatty acid lower alkyl ester comprising 10 to 100 mass % of an unsaturated fatty acid lower alkyl ester. This method is a more efficient and industrially suitable fractionation and production method of fats and oils rich in a di-saturated mono-unsaturated triglyceride (X2U triglyceride).

## Description

### Technical Field of the Invention

The present invention relates to methods for producing fats and oils which are rich in a triglyceride comprising two saturated fatty acid residues and one unsaturated fatty acid residue (X2U triglyceride).

### Background of the Invention

Hard butter including cocoa butter is widely used in foods such as confectionery products involving chocolates and bread products, pharmaceutical products, cosmetics, or the like. The above hard butter consists primarily of symmetric di-saturated mono-unsaturated triglycerides having one unsaturated bond in a molecule such as 1,3-dipalmitoyl-2-oleoyl-glycerol (POP), a triglyceride having an oleoyl group on the second position and each one group of a palmitoyl group and a stearoyl group (POS), and 1,3-distearoyl-2-oleoyl-glycerol (SOS). Such hard butter is known as tempering fats for chocolates. Further, symmetric di-saturated mono-unsaturated triglycerides having two unsaturated bonds in a molecule such as 1,3-distearoyl-2-linoleoyl glycerol (SLS) which have good quality as a chocolate tempering agent are also known.

Generally, these triglycerides can be obtained as natural fats and oils containing such compound(s), e.g. palm oil, shea butter, sal butter, and illipe butter; or as fractionated oils thereof. Further, other than the triglycerides obtained as fractionated oil of fats and oils such as palm oil, shea butter, sal butter, and illipe butter, it is proposed that such triglycerides can also be obtained by the method which comprises the steps of reacting 1,3-selective lipase to a specific fat or oil; and transesterifying them to produce the triglycerides (Patent Literatures 1 to 3).

In addition, it is also known that asymmetric di-saturated mono-unsaturated triglycerides such as 1,2-dipalmitoyl-3-oleoyl-glycerol (PPO) and 1,2-distearoyl-3-oleoyl-glycerol (SSO) are suitable for use in confectionery products, bread products or the like as a raw material of non-tempering fats. It is also proposed that, other than the triglycerides obtained as fractionated oil of natural fats and oils, such triglycerides can also be obtained by the method which comprises the steps of reacting 1,3-selective lipase to a specific fat or oil; and transesterifying them to produce the triglycerides (Patent Literatures 4 to 5).

In each of the above methods, fractionation is conducted to obtain an end product. However, in order to improve the quality thereof, solvent fractionation or complicated process control is required, and, therefore, the above methods are not satisfactory in terms of production efficiency. Thus, it has been desired to provide more effective and more industrially suitable methods for producing fats and oils which are rich in a di-saturated mono-unsaturated triglyceride (X2U triglyceride).

| | |
|---|---|
| Patent Literature 1: | JP 55-71797 A |
| Patent Literature 2: | JP 62-155048 A |
| Patent Literature 3: | WO 2005/063952 |
| Patent Literature 4: | JP 61-224934 A |
| Patent Literature 5: | JP 10-25491 A |

### Disclosure of the Invention

The object of the present invention is to provide a more effective and industrially suitable method for producing fats and oils which are rich in a di-saturated mono-unsaturated triglyceride (X2U triglyceride or X2U TG).

The present invention has been completed based on the finding that the above problems can be solved by a method which comprises the step of fractionating fats and oils comprising a specific amount of a di-saturated mono-unsaturated triglyceride (X2U triglyceride) in the presence of a fatty acid lower alkyl ester comprising an unsaturated fatty acid lower alkyl ester.

Namely, the first invention provides a method for producing fats and oils rich in a X2U triglyceride which comprises the step of fractionating fats and oils which comprise 20 to 60 mass % of a di-saturated mono-unsaturated triglyceride (X2U triglyceride) which consists of two saturated fatty acid residues and one unsaturated fatty acid residue in total triglycerides in the presence of 1 to 50 mass % of a fatty acid lower alkyl ester comprising 10 to 100 mass % of an unsaturated fatty acid lower alkyl ester.

The second invention provides the method for producing fats and oils according to the first invention, wherein the fatty acid lower alkyl ester is the fatty acid lower alkyl ester comprising 30 to 100 mass % of an unsaturated fatty acid lower alkyl ester.

The third invention provides the method for producing fats and oils according to the first or second invention, wherein the fats and oils which comprise 20 to 60 mass % of a X2U triglyceride in total triglycerides are derived from a distillation residue obtained by transesterifying a mixture of fats and oils and a fatty acid lower alkyl ester with 1,3-selective lipase, and then decreasing the fatty acid lower alkyl ester to 50 mass % or lower by distillation.

The fourth invention provides foods comprising the fats and oils rich in a X2U triglyceride produced according to any one of the first to third inventions.

According to the present invention, when producing fats and oils which are rich in a di-saturated mono-unsaturated triglyceride (X2U triglyceride), it becomes possible to provide a safer, more effective and industrially suitable method for producing them by using a fatty acid lower alkyl ester which is used as a raw material of transesterification and without using an organic solvent which is highly volatile and difficult to be treated.

### Best Mode for Carrying out the Invention

The method for producing fats and oils which are rich in a di-saturated mono-unsaturated triglyceride (X2U triglyceride) of the present invention is hereinafter described in detail.

A di-saturated mono-unsaturated triglyceride (X2U triglyceride) of the present invention can be symmetric (XUX), asymmetric (XXU or UXX) or a mixture thereof depending on a triglyceride which is an intended product.

As for a fatty acid residue constituting a X2U triglyceride, in terms of availability in the food industry, a saturated fatty acid residue X preferably has 12 to 26 carbon atoms and more preferably 16 to 22 carbon atoms. Particularly, a palmitoyl group, a stearoyl group or a behenoyl group is preferable. Further, an unsaturated fatty acid residue U preferably has 16 to 26 carbon atoms and more preferably 16 to 22 carbon atoms. The unsaturation degree of an unsaturated fatty acid is preferably 1 to 6 and more preferably 1 to 3. Particularly preferable examples of an unsaturated fatty acid residue include an oleyl group, a linoleoyl group and a linoleyl group.

In the production method of the present invention, it is required that fats and oils comprising 20 to 60 mass % of a X2U triglyceride in total triglycerides are used as a fractionation raw material. Considering fractionation efficiency and economic efficiency, the content of a X2U triglyceride in total triglycerides is more preferably 30 to 60 mass % and most preferably 40 to 60 mass %.

In the production method of the present invention, fats and oils comprising 20 to 60 mass % of a X2U triglyceride in total triglycerides which are used as a fractionation raw material are preferably those comprising 85 mass % or more of triglycerides, more preferably 90 mass % or more thereof, and most preferably 94 mass % or more thereof. For example, fats and oils fractionating palm oil, shea butter, sal butter, illipe butter or the like can be used. It is particularly preferable in production efficiency that fats and oils are derived from a distillation residue obtained by reacting 1,3-selective lipase to a mixture of fats and oils and a fatty acid lower alkyl ester to conduct transesterification, and distilling a part of or all of the fatty acid lower alkyl ester.

In the present invention, fats and oils are, in the case of a mixture with a fatty acid lower alkyl ester, defined as those from that a fatty acid lower alkyl ester is excluded. Therefore, in the case of using a distillation residue after the transesterification as mentioned above, fats and oils comprising 20 to 60 mass % of a X2U triglyceride in total triglycerides correspond to the fats and oils from which a fatty acid lower alkyl ester remaining in the distillation residue is excluded.

In the production method of the present invention, fats and oils comprising 20 to 60 mass % of a X2U triglyceride in total triglycerides are fractionated through the cooling crystallization process in the presence of 1 to 50 mass % of a fatty acid lower alkyl ester comprising 10 to 100 mass % of an unsaturated fatty acid lower alkyl ester.

Namely, in the production method of the present invention, a fractionation raw material which comprises 1 to 50 mass % of a fatty acid lower alkyl ester comprising 10 to 100 mass % of an unsaturated fatty acid lower alkyl ester and which also comprises 20 to 60 mass % of a X2U triglyceride in total triglycerides of fats and oils from that a fatty acid lower alkyl ester is excluded is fractionated through the cooling crystallization process to obtain fats and oils rich in a X2U triglyceride. The fractionation is preferably conducted in the presence of 1 to 30 mass % of a fatty acid lower alkyl ester, more preferably in the presence of 4 to 25 mass % thereof and most preferably 7 to 23 mass % thereof. The above range of a fatty acid lower alkyl ester is preferable because fats and oils rich in a X2U triglyceride can be efficiently obtained.

An unsaturated fatty acid lower alkyl ester used in a fractionation raw material is not particularly limited, and preferably lower alcohol esters of unsaturated fatty acids having 16 to 22 carbon atoms (preferably an oleic acid, a linoleic acid or a linolenic acid), and particularly preferably esters of unsaturated fatty acids and alcohols having 1 to 6 carbon atoms. Particularly, methanol, ethanol or isopropyl alcohol is preferable, and ethanol is further more preferable in terms of processing edible fats and oils.

A saturated fatty acid lower alkyl ester which is an optional component other than a unsaturated fatty acid lower alkyl ester is not particularly limited, and preferably lower alcohol esters of saturated fatty acids having 16 to 22 carbon atoms (preferably a palmitic acid, a stearic acid or a behenic acid), and particularly preferably esters of saturated fatty acids and alcohols having 1 to 6 carbon atoms. Particularly, methanol, ethanol or isopropyl alcohol is preferable, and ethanol is further more preferable in terms of processing edible fats and oils.

The content of an unsaturated fatty acid lower alkyl ester in a fatty acid lower alkyl ester is 10 to 100 mass %, preferably 20 to 100 mass %, and more preferably 30 to 100 mass %. The above range of the content of an unsaturated fatty acid lower alkyl ester in a fatty acid lower alkyl ester is preferable because fats and oils rich in a X2U triglyceride can be efficiently obtained.

In the production method of the present invention, fats and oils rich in a X2U triglyceride can be ultimately obtained in a stearin part (a solid fat part) by fractionating fats and oils comprising 20 to 60 mass % of a X2U triglyceride in total triglycerides in the presence of a fatty acid lower alkyl ester through the cooling crystallization process.

Examples of the preferable embodiment of fats and oils comprising 20 to 60 mass % of a X2U triglyceride in total triglycerides which are used in the production method of the present invention include a distillation residue (which comprises 50 mass % or more and preferably 70 mass % or more of a XOX triglyceride in a X2U triglyceride, O: an oleic acid) obtained by transesterifying fats and oils having 50 mass % or more of an oleoyl group on the second position with a fatty acid lower alkyl ester (which may comprise 0.01 to 10 mass % of a free fatty acid) and then distilling the reactant. A saturated fatty acid residue in a XOX triglyceride is preferably a saturated fatty acid residue having 16 to 22 carbon atoms, and more preferably a stearoyl group, a palmitoyl group or a behenoyl group. More specifically, such fats and oils can be obtained by the method which comprises the steps of adding a fatty acid lower alkyl ester to raw fats and oils such as trioleoylglycerol, low-melting-point part of shea butter (for example, iodine value 70 to 80), high-oleic sunflower oil, high-oleic low-linolenic rapeseed oil, high-oleic safflower oil, palm oil and palm fractionation oil; further acting 1,3-selective lipase such as *Rhizopus* lipase, *Aspergillus* lipase, *Mucor* lipase, pancreatic lipase and rice bran lipase to conduct transesterification; and then distilling the reactant and removing a part or all of an unreacting raw material, by-product fatty acids such as an oleic acid or the lower alkyl esters thereof to obtain a distillation residue.

A fatty acid lower alkyl ester herein used is preferably lower alcohol esters of saturated fatty acids having 16 to 22 carbon atoms (preferably a palmitic acid, a stearic acid or a behenic acid), and particularly preferably esters with alcohols having 1 to 6 carbon atoms. Particularly, methanol, ethanol or isopropyl alcohol is preferable, and ethanol is further more preferable in terms of processing edible fats and oils.

The usage rate (molar ratio) of fats and oils having 50 mass % or more of an oleoyl group on the second position per a fatty acid lower alkyl ester is preferably 1/2 or less, and particularly preferably 1/2 to 1/30.

Examples of the preferable embodiment of fats and oils comprising 20 to 60 mass % of a X2U triglyceride in total triglycerides which are used in the production method of the present invention also include fats and oils which comprise 50 mass % or more and preferably 70 mass % or more of a triglyceride having saturated fatty acid residues on the first and third positions and a linoleoyl group on the second position (XLX triglyceride, L: a linoleic acid) in a X2U triglyceride. A saturated fatty acid residue in a XLX triglyceride is preferably a saturated fatty acid residue having 16 to 22 carbon atoms, and more preferably a stearoyl group, a palmitoyl group or a behenoyl group.

Fats and oils comprising a XLX triglyceride can be obtained by the method which comprises the steps of, as with XOX triglyceride, adding a saturated fatty acid lower alkyl ester having 16 to 22 carbon atoms (which may comprise 0.01 to 10 mass % of a free fatty acid) to fats and oils having 50 mass % or more of a linoleoyl group on the second position, more specifically, raw fats and oils such as trilinoleoylglycerol, high linoleic sunflower oil and high linoleic safflower oil; further acting 1,3-selective lipase to conduct transesterification; and then distilling a part or all of a fatty acid lower alkyl ester to obtain a distillation residue.

Examples of the preferable embodiment of fats and oils comprising 20 to 60 mass % of a X2U triglyceride in total triglycerides which are used in the production method of the present invention also include fats and oils which comprise 50 mass % or more and preferably 70 mass % or more of a triglyceride having saturated fatty acid residues on the first and third positions and a linoleyl group on the second position (XLnX triglyceride, Ln: a linolenic acid) in a X2U triglyceride. A saturated fatty acid residue in a XLnX triglyceride is preferably a saturated fatty acid residue having 16 to 22 carbon atoms, and more preferably a stearoyl group, a palmitoyl group or a behenoyl group.

Fats and oils comprising a XLnX triglyceride can be obtained by the method which comprises the steps of, as with XOX triglyceride, adding a saturated fatty acid lower alkyl ester having 16 to 22 carbon atoms (which may comprise 0.01 to 10 mass % of a free fatty acid) to fats and oils having 50 mass % or more of a linoleyl group on the second position, more specifically, raw fats and oils such as trilinoleylglycerol, linseed oil, shiso oil and perilla oil; further acting 1,3-selective lipase to conduct transesterification; and then distilling a part or all of a fatty acid lower alkyl ester to obtain a distillation residue.

Examples of the preferable embodiment of fats and oils comprising 20 to 60 mass % of a X2U triglyceride in total triglycerides which are used in the production method of the present invention also include fats and oils which comprise 50 mass % or more and preferably 70 mass % or more of a triglyceride having saturated fatty acid residues on the first and second porisions or the second and third positions and an unsaturated fatty acid residue on the third position or the first position (XXU and/or UXX triglyceride) in a X2U triglyceride. A saturated fatty acid residue in a XXU and/or UXX triglyceride is preferably a saturated fatty acid residue having 16 to 22 carbon atoms, and more preferably a stearoyl group, a palmitoyl group or a behenoyl group. An unsaturated fatty acid residue in a XXU and/or UXX triglyceride is preferably an unsaturated fatty acid residue having 16 to 22 carbon atoms, and more preferably an oleyl group, a linoleoyl group or a linoleyl group.

More specifically, fats and oils comprising a XXU and/or UXX triglyceride can be obtained by the method which comprises the steps of adding one or more kinds of a fatty acid lower alkyl ester (which may comprise 0.01 to 10 mass % of a free fatty acid) selected from the group consisting of lower alkyl esters of an oleic acid, lower alkyl esters of a linoleic acid and lower alkyl esters of a linolenic acid to extremely hardened oil of animal or vegetable fats and oils comprising 80 mass % or more of fatty acids having 16 or more carbon atoms; and, as with the preparation of a XUX triglyceride, acting 1,3-selective lipase to conduct transesterification; and then distilling a part or all of a fatty acid lower alkyl ester to obtain a distillation residue.

### 1,3-Selective lipase is preferably Rhizopus delemar or Rhizopus oryzae of Rhizop us sp..

Examples of these lipases include Picantase R8000 (a product of Robin) and Lipase F-AP 15 (a product of Amano Enzyme Inc.). The most preferable lipase is Lipase DF "Amano" 15-K (also referred to as Lipase D) derived from *Rhizopus oryzae,* a product of Amano Enzyme Inc. This product is a powdered lipase. Meanwhile, DF "Amano" 15-K was previously described as it is derived from *Rhizopus delemar.*

Lipases herein used may be those obtained by drying an aqueous solution of lipase which contains the medium component of the lipase, or the like. As powdered lipases, it is preferable to use those which is spherical and of which water content is 10 mass % or less. It is particularly preferable to use a powdered lipase of which 90 mass % or more have a particle size of 1 to 100 µm. Further, a powdered lipase is preferably produced by spray drying an aqueous solution of lipase of which pH is adjusted to 6 to 7.5.

It is also preferable to use a granulated powdered lipase (also referred to as a powdered lipase) which is produced by granulating the above lipase with soybean powder and powderizing it.

In addition, marketed immobilized lipases can be preferably used. Examples of such lipases include Lipozyme RM IM and Lipozyme TL IM, products of Novozymes.

As for transesterification reaction, the reaction can be conducted in accordance with the ordinary method, i.e. by adding the above lipase to a raw material which comprises fats and oils and a fatty acid lower alkyl ester (which may comprise 0.01 to 10 mass % of a free fatty acid). In such a case, it is preferable to conduct the transesterification reaction in the conditions that 0.01 to 10 parts by weight (preferably 0.01 to 2 parts by weight, and more preferably 0.1 to 1.5 parts by weight) of lipase per 100 parts by weight of a raw material is added thereto, at 35 to 100°C (preferably 35 to 80°C, and more preferably 40 to 60°C), for 0.1 to 50 hours (preferably 0.5 to 30 hours, and more preferably 1 to 20 hours). The reaction is preferably conducted by the batch method. The reaction temperature may be optional only if it is the temperature at which fats and oils, which are reaction substrates, dissolve and have an enzymatic activity. Since the most suitable reaction time changes depending on the enzyme additive amount, reaction temperature or the like, it can be appropriately adjusted.

After the transesterification, an unreacted raw material, by-product fatty acids or fatty acid lower alkyl esters are removed by distilling the reactant until their contents become 50 mass% or less to obtain fats and oils comprising 20 to 60 mass % and preferably 30 to 60 mass % of a X2U triglyceride in total triglycerides, which are used as a fractionation raw material in the present invention.

In the present invention, when conducting transesterification, it is allowed to adjust the content of a fatty acid lower alkyl ester comprising 10 to 100 mass % of an unsaturated fatty acid lower alkyl ester so that it becomes 1 to 50 mass % (preferably 1 to 30 mass %, more preferably 4 to 25 mass % and most preferably 7 to 23 mass %) by using more than 50 mass % of a fatty acid lower alkyl ester in a raw material of the transesterification and controlling the distillation to leave the fatty acid lower alkyl ester in a distillation residue comprising fats and oils which comprise 20 to 60 mass % of a X2U triglyceride in total triglycerides, or by separately adding a fatty acid lower alkyl ester. Further, it is also allowed to remove an unreacted raw material (comprising a fatty acid lower alkyl ester), by-product fatty acids or the lower alkyl esters thereof as much as possible by distillation; and to newly add a fatty acid lower alkyl ester comprising 10 to 100 mass % of an unsaturated fatty acid lower alkyl ester to fats and oils which comprise 20 to 60 mass % of a X2U triglyceride in total triglycerides, so that the content of the fatty acid lower alkyl ester becomes 1 to 50 mass % (preferably 1 to 30 mass %, more preferably 4 to 25 mass % and most preferably 7 to 23 mass %).

A fatty acid lower alkyl esters newly added thereto is not particularly limited, and preferably lower alcohol esters of fatty acids having 16 to 22 carbon atoms, and particularly preferably esters of unsaturated fatty acids and alcohols having 1 to 6 carbon atoms. Particularly, methanol, ethanol or isopropyl alcohol is preferable, and ethanol is further more preferable in terms of processing edible fats and oils.

In the production method of the present invention, 0.01 to 5 mass % of a free fatty acid can exist in a fractionation raw material. The content of a free fatty acid is preferably 0.01 to 3 mass % and most preferably 0.01 to 1 mass %. The above range of a free fatty acid is preferable because fats and oils rich in a X2U triglyceride can be efficiently obtained.

In the production method of the present invention, a fatty acid lower alkyl ester / a free fatty acid is, on a mass basis, preferably ≧ 10, and more preferably ≧20. The above range of a fatty acid lower alkyl ester / a free fatty acid is preferable because fats and oils rich in a X2U triglyceride can be efficiently obtained.

In the present invention, it is preferable to produce fats and oils rich in a X2U triglyceride by the method which comprises the steps of dissolving thus prepared fractionation raw material which comprises 1 to 50 mass % of a fatty acid lower alkyl ester comprising 10 to 100 mass % of an unsaturated fatty acid lower alkyl ester and which also comprises 20 to 60 mass % of a X2U triglyceride in total triglycerides of fats and oils from that a fatty acid lower alkyl ester is excluded by heating it up to the temperature at which all of it uniformly dissolve (for example, 50°C or higher, and preferably 50 to 70°C); keeping the reactant at the same temperature soon after the dissolution or for a specific time (for example, 0.5 to 2 hours); then cooling it down to room temperature or lower (for example, 25°C or lower, preferably 15 to 25°C, more preferably 15 to 22°C, and most preferably 15 to 19°C) to precipitate a solid content rich in a X2U triglyceride; and conducting solid-liquid separation to obtain said fats and oils. In addition, it is also preferable to keep the reactant at specific temperature (for example, 26 to 35°C, and preferably 26 to 28°C) for a specific time (for example, 0.5 to 5 hours, and preferably 1 to 3 hours) before cooling it down to room temperature or lower to precipitate a solid content rich in a X2U triglyceride.

Meanwhile, in the case of a X20 triglyceride, the reaction conditions are the same as above. In the case of a X2L triglyceride or a X2Ln triglyceride, the reaction is conducted in the conditions that the cooling temperature is 20°C or lower and preferably 5 to 15°C.

The above processes from dissolution by heating to cooling can be conducted with stirring and/or still standing.

According to the above method, it is possible to especially shorten the time for crystallization of fats and oils rich in a X2U triglyceride; and, each of stability and the yield of a solid content obtained by crystallization is improved. In addition to it, it also has the advantage that crystals having good filterability can be obtained and thus, the content of a X2U triglyceride improves. Further, in the method which comprises the steps of making a fatty acid lower alkyl ester comprised, and stirring and cooling the reactant, it is possible to obtain a crystallized substance having flowability, and crystals thereof have good filterability. Therefore, it becomes easier to conduct solid-liquid separation, and it has the advantage that the content of a X2U triglyceride improves.

In the present invention, the solid content rich in a X2U triglyceride is precipitated by the method comprising the steps of dissolving by heating a fractionation raw material which comprises 1 to 50 mass % of a fatty acid lower alkyl ester comprising 10 to 100 mass % of an unsaturated fatty acid lower alkyl ester and which also comprises 20 to 60 mass % of a X2U triglyceride in total triglycerides of fats and oils from that a fatty acid lower alkyl ester is excluded, and cooling the reactant. In such processes, it is preferable to produce fats and oils rich in a X2U triglyceride by the method comprising the steps of crystallizing a tri-saturated fatty acid triglyceride (XXX triglyceride or XXX TG) or a di-saturated fatty acid diglyceride (XX diglyceride or XX DG) at the temperature at which a X2U triglyceride hardly crystallizes (for example 26 to 35°C, and preferably 26 to 28°C), and removing it by separation; then cooling the reactant to room temperature or lower (for example, 25°C or lower, preferably 15 to 25°C, more preferably 15 to 22°C and most preferably 15 to 19°C), or heating the reactant again (for example, 50°C or higher, and preferably 50 to 70°C) and then cooling it down to room temperature or lower (for example, 25°C or lower, preferably 15 to 25°C, more preferably 15 to 22°C and most preferably 15 to 19°C) to precipitate a solid content rich in a X2U triglyceride; and conducting solid-liquid separation to such solid content to obtain said fats and oils. In this case, it is preferable to keep the reactant at specific temperature (for example, 26 to 35°C, and preferably 26 to 28°C) for a specific time (for example, 0.5 to 5 hours, and preferably 1 to 3 hours) after removing a XXX triglyceride or a XX diglyceride by separation and before cooling the reactant to room temperature or lower to precipitate a solid content rich in a X2U triglyceride. According to this method comprising the step of making a fatty acid lower alkyl ester comprised, the content of a X2U triglyceride is high, and the stability of the solid content obtained by crystallization is improved. In addition to it, it also has the advantage that a XXX triglyceride or a XX diglyceride can be decreased, each of which adversely affects crystallization of chocolates.

Meanwhile, in the case of a X2O triglyceride, the reaction conditions are the same as above. In the case of a X2L triglyceride or a X2Ln triglyceride, the reaction is conducted in the conditions that the cooling temperature in the final fractionation phase is 20°C or lower and preferably 5 to 15°C.

The pressure filtration for conducting solid-liquid separation is preferably conducted with, for example, a press filter which is used for separation by filtration of palm oil or the like, and the solid-liquid separation of precipitated crystals is preferably conducted at room temperature or lower (preferably 20 to 27°C). Fats and oils rich in a X2U triglyceride of the present invention can be ultimately obtained in a stearin part (a solid fat part) by fractionating fats and oils through the cooling crystallization process. The ultimately obtained solid fat part comprises a fatty acid lower alkyl ester at around 50 to 60 % of the content thereof which a fractionation raw material comprises (if a fractionation raw material comprises 20 mass % of a fatty acid lower alkyl ester, the content thereof in a solid fat part is 10 to 12 mass %). In the solid fat part, the content of triglycerides of fats and oils from that a fatty acid lower alkyl ester is excluded is preferably 85 mass % (more preferably 90 mass % and most preferably 94 mass %), and the content of a X2U triglyceride in total triglycerides is 65 mass % or more, preferably 70 mass % or more, more preferably 75 mass % or more, and most preferably 80 mass % or more.

Further, the purification process, which is an optional process conducted after the above process, can be conducted in accordance with the ordinary method (such as steam distillation). According to this method, a fatty acid lower alkyl ester can be removed before producing an end product. Thus, it is possible to obtain fats and oils wherein the content of triglycerides is preferably 85 mass % (more preferably 90 mass % and most preferably 94 mass %); and the content of a X2U triglyceride in total triglycerides is 65 mass % or more, preferably 70 mass % or more, more preferably 75 mass % or more, and most preferably 80 mass % or more.

It is also allowed to conduct a usually operated purification process(es) of fats and oils such as deacidification, bleaching and deodorizing.

Fats and oils rich in a X2U triglyceride obtained by the production method of the present invention can be particularly preferably used as a cocoa butter equivalent (hard butter). Chocolate products, for example, comprise a sugar component and a fat and oil component containing the above hard butter. It is preferable that the above hard butter is contained in the fat and oil component at a rate of 10 mass % or more, preferably 20 mass % or more, and further more preferably 30 mass %. As for a sugar component, any one which is used for chocolates is usable. Examples thereof include sucrose, fructose and mixtures thereof. Sugar alcohols such as sorbitol are also usable. In addition, other optional component(s) which is usually contained in chocolate products can also be contained. Examples thereof include emulsifying agents (usually, lecithin), flavoring agents, skim milk powder, and whole milk powder.

Further, fats and oils rich in a X2U triglyceride obtained by the production method of the present invention can be preferably used as a raw material of processed fat and oil products such as margarine, shortening, filling and O/W cream by mixing them with one or more kinds of fats and oils selected from the group consisting of soybean oil, rapeseed oil, sunflower oil, corn oil, cotton seed oil, safflower oil, peanut oil, palm oil, cocoa butter, shea butter, coconut oil, palm kernel oil, beef tallow, lard, milk fat, and processed oils wherein the above oils are treated with fractionation, hydrogenation, transesterification or the like.

### Examples

Next, Examples will further illustrate the present invention. They only explain the present invention and do not particularly limit the invention.

### Analytical method

Analysis of triglycerides was conducted by gas chromatography based on JAOCS, vol. 70, 11, 1111-1114 (1993).

Symmetry of triglycerides was determined by silver ion column-HPLC based on the method of J. High Resolut. Chromatogr., 18, 105-107 (1995).

Analysis of a fatty acid lower alkyl ester was conducted by gas chromatography.

### Preparation of a powdered lipase composition A

Autoclave sterilization (121°C, 15mins.) was previously conducted to an enzyme solution (150000U/mL) of a trade name: Lipase DF "Amano" 15-K (also referred to as Lipase D), a product of Amano Enzyme Inc. A threefold amount of 10% aqueous solution of deodorized whole fat soy bean powder (fat content: 23 mass %; trade name: Alphaplus HS-600, produced by Nisshin Cosmo Foods, Ltd.) cooled down to around room temperature was added thereto with stirring. Then, the mixture was adjusted to pH7.8 by 0.5N NaOH solution, and spray-dried (SD-1000, by Tokyo Rikakikai Co., Ltd.) to obtain a powdered lipase composition A.

### (Preparation of a distillation residue 1 for fractionating)

21000g of ethyl stearate (trade name: Ethyl Stearate, by Inoue Perfumery MFG. Co., Ltd.) was mixed with 14000g of high-oleic sunflower oil (trade name: Olein Rich, by Showa Sangyo Co., Ltd.). 0.3 mass % of the powdered lipase composition A was added thereto, and stirred at 40°C for 20 hours. An enzyme powder was removed by filtration to obtain 34379g of a reactant 1. Thin-film distillation was conducted to 34300g of the obtained reactant 1, and a fatty acid ethyl was removed from the reactant at distillation temperature of 140°C to obtain 13721g of a distillation residue 1 wherein the content of triglycerides is 93.2 mass % and the content of a fatty acid ethyl is 2.9 mass %. Each fractionation of Examples 1 to 4, Comparative Example 1 and Referential Example 1 was conducted using the obtained distillation residue 1. Meanwhile, a distillate in the thin-film distillation was defined as a distillate 1. The results are shown in Tables 1 and 2.

### Example 1

155g of ethyl oleate (trade name: Ethyl Oleate SP, by Inoue Perfumery MFG. Co., Ltd.) was mixed with 845g of the distillation residue 1 to obtain a fractionation raw material wherein the content of a fatty acid ethyl is 18.0 mass % (wherein the content of an unsaturated fatty acid ethyl is 90 mass %) and the content of a free fatty acid is 0.2 mass%. The fractionation raw material was completely dissolved at 50°C and cooled down with stirring at 27°C for 2.5 hours and then at 18°C for 4 hours. Then, solid-liquid separation was conducted to it by pressure filtration (compression pressure 30 kgf/cm²; use of The Nisshin OilliO Group, Ltd. self-produced press filter) to obtain 464g of a solid fat part and 515g of a liquid part.

### Example 2

155g of the distillate 1 in the thin-film distillation was mixed with 845g of the distillation residue 1 to obtain a fractionation raw material wherein the content of a fatty acid ethyl is 17.7 mass % (wherein the content of an unsaturated fatty acid ethyl is 28 mass %) and the content of a free fatty acid is 0.5 mass %. The fractionation raw material was completely dissolved at 50°C and cooled down with stirring at 27°C for 2.5 hours and then at 18°C for 4 hours. Then, solid-liquid separation was conducted to it by pressure filtration (compression pressure 30 kgf/cm²; use of The Nisshin OilliO Group, Ltd. self-produced press filter) to obtain 453g of a solid fat part and 527g of a liquid part.

### Example 3

48g of the distillate 1 in the thin-film distillation and 107g of ethyl stearate (trade name: Ethyl Stearate, by Inoue Perfumery MFG. Co., Ltd.) were mixed with 845g of the distillation residue 1 to obtain a fractionation raw material wherein the content of a fatty acid ethyl is 17.8 mass % (wherein the content of an unsaturated fatty acid ethyl is 11 mass %) and the content of a free fatty acid is 0.3 mass %. The fractionation raw material was completely dissolved at 50°C and cooled down with stirring at 27°C for 2.5 hours and then at 18°C for 4 hours. Then, solid-liquid separation was conducted to it by pressure filtration (compression pressure 30 kgf/cm²; use of The Nisshin OilliO Group, Ltd. self-produced press filter) to obtain 431g of a solid fat part and 547g of a liquid part.

### Example 4

42g of ethyl oleate (trade name: Ethyl Oleate SP, by Inoue Perfumery MFG. Co., Ltd.) was mixed with 958g of the distillation residue 1 to obtain a fractionation raw material wherein the content of a fatty acid ethyl is 7.0 mass % (wherein the content of an unsaturated fatty acid ethyl is 71 mass %) and the content of a free fatty acid is 0.1 mass %. The fractionation raw material was completely dissolved at 50°C and cooled down with stirring at 27°C for 2.5 hours and then at 18°C for 4 hours. Then, solid-liquid separation was conducted to it by pressure filtration (compression pressure 30 kgf/cm²; use of The Nisshin OilliO Group, Ltd. self-produced press filter) to obtain 494g of a solid fat part and 482g of a liquid part.

### Comparative Example 1

155g of ethyl stearate (trade name: Ethyl Stearate, by Inoue Perfumery MFG. Co., Ltd.) was mixed with 845g of the distillation residue 1 to obtain a fractionation raw material wherein the content of a fatty acid ethyl is 18.0 mass % (wherein the content of an unsaturated fatty acid ethyl is 3.5 mass %) and a content of a free fatty acid is 0.2 mass %. The fractionation raw material was completely dissolved at 50°C and cooled down with stirring at 27°C for 2.5 hours and then at 18°C for 4 hours. Then, the reactant became too sticky to conduct pressure filtration.

### Referential Example 1

155g of ethyl stearate (trade name: Ethyl Stearate, by Inoue Perfumery MFG. Co., Ltd.) was mixed with 845g of the distillation residue 1 to obtain a fractionation raw material wherein the content of a fatty acid ethyl is 18.0 mass % (wherein the content of an unsaturated fatty acid ethyl is 3.5 mass %) and the content of a free fatty acid is 0.2 mass %. The fractionation raw material was completely dissolved at 50°C and cooled down with stirring at 27°C for 2.5 hours and then at 20°C for 4 hours. Then, solid-liquid separation was conducted to it by pressure filtration (compression pressure 30 kgf/cm²; use of The Nisshin OilliO Group, Ltd. self-produced press filter) to obtain 401g of a solid fat part and 577g of a liquid part.

### (Preparation of a distillation residue 2 for fractionating)

9000g of ethyl stearate wherein a distillate collected by thin-film distillation was extremely hydrogenated was mixed with 6000g of high-oleic sunflower oil (trade name: Olein Rich, by Showa Sangyo Co., Ltd.). 0.3 mass % of the powdered lipase composition A was added thereto, and stirred at 40°C for 20 hours. An enzyme powder was removed by filtration to obtain 14700g of a reactant 2. Thin-film distillation was conducted to 14500g of the obtained reactant 2, and a fatty acid ethyl was removed from the reactant at distillation temperature of 140°C to obtain 5723g of a distillation residue 2 wherein the content of triglycerides is 91.8 mass % and the content of a fatty acid ethyl is 3.4 mass %. Each fractionation of Examples 5 and 6 was conducted using the obtained distillation residue 2. Meanwhile, a distillate in the thin-film distillation was defined as a distillate 2. The results are shown in Table 2.

### Example 5

155g of the distillate 2 in the thin-film distillation was mixed with 845g of the distillation residue 2 to obtain a fractionation raw material wherein the content of a fatty acid ethyl is 17.2 mass % (wherein the content of an unsaturated fatty acid ethyl is 27 mass %) and the content of a free fatty acid is 0.7 mass %. The fractionation raw material was completely dissolved at 50°C and cooled down with stirring at 27°C for 2.5 hours and then at 18°C for 4 hours. Then, solid-liquid separation was conducted to it by pressure filtration (compression pressure 30 kgf/cm²; use of The Nisshin OilliO Group, Ltd. self-produced press filter) to obtain 443g of a solid fat part and 537g of a liquid part.

### Example 6

130g of the distillate 2 in the thin-film distillation and 25g of ethyl oleate (trade name: Ethyl Oleate SP, by Inoue Perfumery MFG. Co., Ltd.) were mixed with 845g of the distillation residue 2 to obtain a fractionation raw material wherein the content of a fatty acid ethyl is 17.6 mass % (wherein the content of an unsaturated fatty acid ethyl is 37 mass %) and the content of a free fatty acid is 0.6 mass %. The fractionation raw material was completely dissolved at 50°C and cooled down with stirring at 27°C for 2.5 hours and then at 18°C for 4 hours. Then, solid-liquid separation was conducted to it by pressure filtration (compression pressure 30 kgf/cm²; use of The Nisshin OilliO Group, Ltd. self-produced press filter) to obtain 451g of a solid fat part and 525g of a liquid part.

### (Preparation of a distillation residue 3 for fractionating)

2400g of ethyl stearate (trade name: Ethyl Stearate, by Inoue Perfumery MFG. Co., Ltd.) was mixed with 1600g of high linoleic safflower oil (trade name: Safflower Oil, by The Nisshin OilliO Group, Ltd.). 0.3 mass % of the powdered lipase composition A was added thereto, and stirred at 40°C for 20 hours. An enzyme powder was removed by filtration to obtain 3929g of a reactant 3. Thin-film distillation was conducted to 3900g of the obtained reactant 3, and a fatty acid ethyl was removed from the reactant at distillation temperature of 140°C to obtain 1801g of a distillation residue 3 wherein the content of triglycerides is 79.3 mass % and the content of a fatty acid ethyl is 16.9 mass %. Fractionation of Example 7 was conducted using the obtained distillation residue 3. The results are shown in Table 3.

### Example 7

15g of ethyl oleate (trade name: Ethyl Oleate SP, by Inoue Perfumery MFG. Co., Ltd.) was mixed with 985g of the distillation residue 3 to obtain a fractionation raw material wherein the content of a fatty acid ethyl is 18.1 mass % (wherein the content of an unsaturated fatty acid ethyl is 34 mass %) and the content of a free fatty acid is 0.3 mass %. The fractionation raw material was completely dissolved at 50°C and cooled down with stirring at 27°C for 3 hours. Then, solid-liquid separation was conducted to it by pressure filtration (the first pressure filtration: compression pressure 7 kgf/cm²; use of The Nisshin OilliO Group, Ltd. self-produced press filter) to obtain 29g of a solid fat part and 941g of a liquid part. 600g of the obtained liquid part was gradually cooled down to 10°C with stirring. Then, solid-liquid separation was conducted to it by pressure filtration (the second pressure filtration: compression pressure 30 kgf/cm²; use of The Nisshin OilliO Group, Ltd. self-produced press filter) to obtain 284g of a solid fat part and 304g of a liquid part.

### Preparation of a distillation residue 4 for fractionating

2400g of ethyl oleate (trade name: Ethyl Oleate SP, by Inoue Perfumery MFG. Co., Ltd.) was mixed with 1600g of extremely hardened rapeseed oil (trade name: Extremely Hardened Rapeseed Oil, by Yokozeki Oil & Fat Industries Co., Ltd.). 0.3 mass % of the powdered lipase composition A was added thereto, and stirred at 40°C for 20 hours. An enzyme powder was removed by filtration to obtain 3921g of a reactant 4. Thin-film distillation was conducted to 3900g of the obtained reactant 4, and a fatty acid ethyl was removed from the reactant at distillation temperature of 140°C to obtain 1983g of a distillation residue 4 wherein the content of triglycerides is 72.0 mass % and the content of a fatty acid ethyl is 24.3 mass %. Fractionation of Example 8 was conducted using the obtained distillation residue 4. The results are shown in Table 3.

### Example 8

1000g of the distillation residue 4 was used as a fractionation raw material, wherein the content of a fatty acid ethyl is 24.3 mass % (wherein the content of an unsaturated fatty acid ethyl is 66 mass %) and the content of a free fatty acid is 0.3 mass %. The fractionation raw material was completely dissolved at 50°C and cooled down with stirring at 28°C for 3 hours. Then, solid-liquid separation was conducted to it by pressure filtration (the first pressure filtration: compression pressure 7 kgf/cm²; use of The Nisshin OilliO Group, Ltd. self-produced press filter) to obtain 297g of a solid part and 685g of a liquid part. 600g of the obtained liquid part was gradually cooled down to 20°C with stirring. Then, solid-liquid separation was conducted to it by pressure filtration (the second pressure filtration: compression pressure 30 kgf/cm²; use of The Nisshin OilliO Group, Ltd. self-produced press filter) to obtain 283g of a solid fat part and 301g of a liquid part.

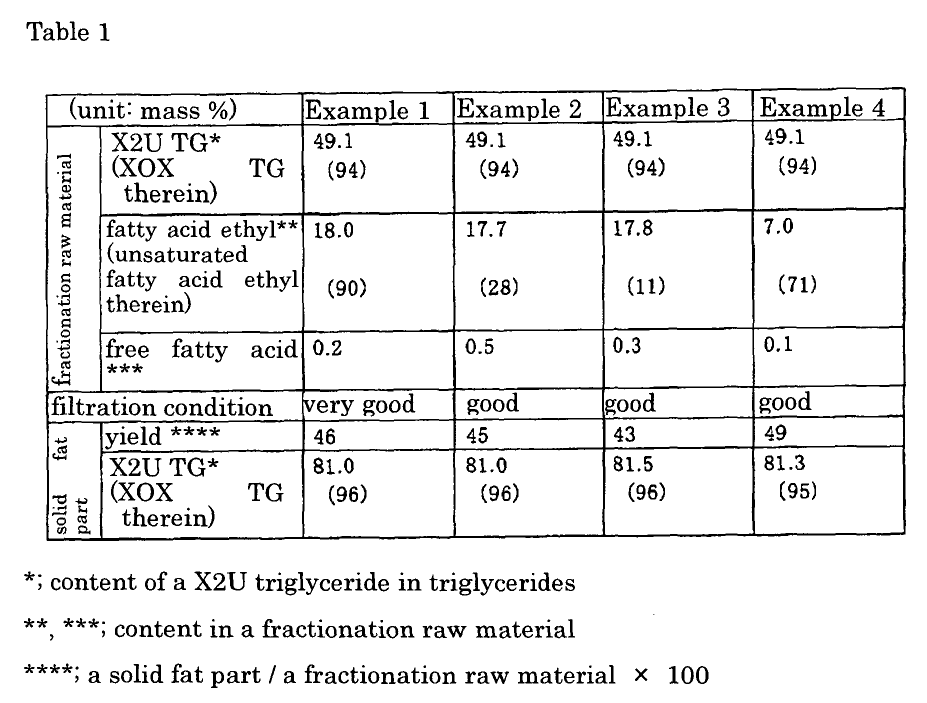

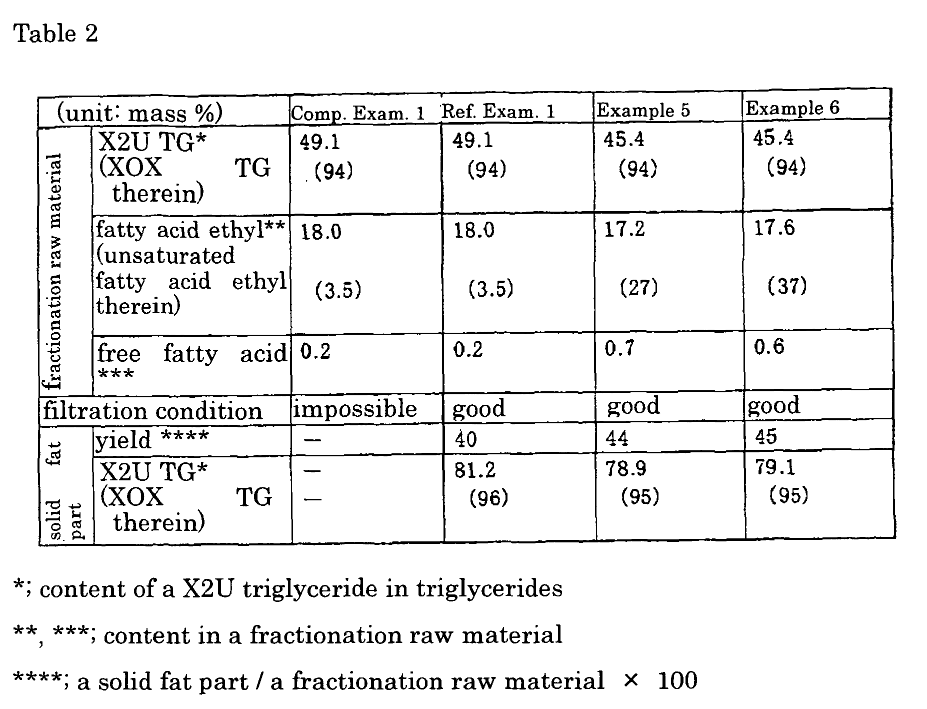

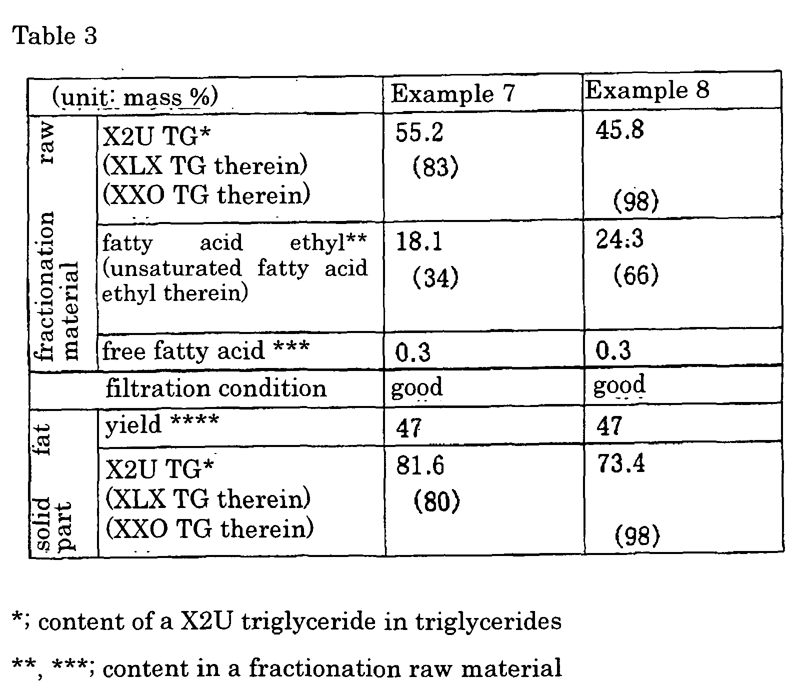

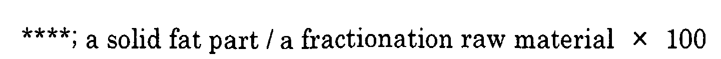

### (Production of chocolates)

The solid fat part obtained in Example 6 was decolorized and deodorized in accordance with ordinary purification methods of fats and oils to obtain hard butter. 7.5 parts of this hard butter, 43.45 parts of sugar, 40.0 parts of cacao mass (oil content 55%), 1.0 part of cocoa butter, 7.5 parts of palm mid fraction, 0.5 part of lecithin and 0.05 part of a flavoring agent were blended. Then, rolling, conching, tempering and molding were conducted in accordance with the ordinary method to produce chocolates. The produced chocolates were easily separated from mold, flavorful and melted well in the mouth.

### (Production of shortening)

The solid fat part obtained in Example 8 and the solid fat part obtained in Example 6 were decolorized and deodorized in accordance with ordinary purification methods of fats and oils to obtain a mixed fat and oil of 6:4. 50 parts of this mixed fat and oil, 47 parts of rapeseed oil and 3 parts of extremely hardened palm oil were mixed and kneaded with rapidly cooling to obtain shortening which is excellent in consistency.

## Claims

1. A method for producing fats and oils rich in a X2U triglyceride, which comprises the step of fractionating fats and oils which comprise 20 to 60 mass % of a di-saturated mono-unsaturated triglyceride (X2U triglyceride) consisting of two saturated fatty acid residues and one unsaturated fatty acid residue in total triglycerides in the presence of 1 to 50 mass % of a fatty acid lower alkyl ester comprising 10 to 100 mass % of an unsaturated fatty acid lower alkyl ester.

2. The method for producing fats and oils according to claim 1, wherein the fatty acid lower alkyl ester is the fatty acid lower alkyl ester comprising 30 to 100 mass % of an unsaturated fatty acid lower alkyl ester.

3. The method for producing fats and oils according to claim 1 or 2, wherein the fats and oils which comprise 20 to 60 mass % of a X2U triglyceride in total triglycerides are derived from a distillation residue obtained by transesterifying a mixture of fats and oils and a fatty acid lower alkyl ester with 1,3-selective lipase, and then decreasing the fatty acid lower alkyl ester to 50 mass % or lower by distillation.

4. The method for producing fats and oils according to any one of claims 1 to 3, wherein the fractionation is conducted by dissolving the fatty acid lower alkyl ester and the fats and oils comprising a di-saturated mono-unsaturated triglyceride by heating them up to the temperature at which all of them uniformly dissolve; keeping the reactant at the same temperature soon after the dissolution or for a specific time; then cooling it down to room temperature or lower to precipitate a solid content rich in a X2U triglyceride; and conducting solid-liquid separation.

5. The method for producing fats and oils according to any one of claims 1 to 3, wherein the fractionation is conducted by dissolving the fatty acid lower alkyl ester and the fats and oils comprising a di-saturated mono-unsaturated triglyceride by heating them up to the temperature at which all of them uniformly dissolve; cooling down the reactant to precipitate a solid content rich in a X2U triglyceride, but at the temperature at which a X2U triglyceride hardly crystallizes, crystallizing a tri-saturated fatty acid triglyceride or a di-saturated fatty acid diglyceride and removing it by separation; then further cooling down the reactant to room temperature or lower to precipitate a solid content rich in a X2U triglyceride; and conducting solid-liquid separation.

6. The method for producing fats and oils according to claim 4 or 5, wherein the room temperature or lower is 25°C or lower.

7. The method for producing fats and oils according to claim 4 or 5, wherein the room temperature or lower is 15 to 25°C.

8. The method for producing fats and oils according to claim 4, wherein the specific time is 0.5 to 2 hours.

9. The method for producing fats and oils according to claim 5, wherein the temperature at which a X2U triglyceride hardly crystallizes in precipitating a solid content rich in a X2U triglyceride is 26 to 35°C.

10. The method for producing fats and oils according to any one of claims 4 to 9, wherein the solid-liquid separation is conducted by pressure filtration.

11. A food comprising the fats and oils rich in a X2U triglyceride produced by the method according to any one of claims 1 to 10.
